# EUROPEAN PATENT SPECIFICATION

(11) **EP 2 814 787 B1**
(45) Date of publication and mention of the grant of the patent: **26.12.2018**
(21) Application number: 13706390.5
(22) Date of filing: 14.02.2013
(51) Int. Cl.: C04B 28/02, C04B 20/02, C09K 8/467, E21B 33/13

(54) **METHODS AND COMPOSITIONS COMPRISING CEMENT KILN DUST HAVING AN ALTERED PARTICLE SIZE**
VERFAHREN UND ZUSAMMENSETZUNGEN MIT ZEMENTOFENSTAUB MIT VERÄNDERTER TEILCHENGRÖSSE
PROCÉDÉS ET COMPOSITIONS COMPRENANT DE LA POUSSIÈRE DE FOUR À CIMENT AYANT UNE DIMENSION DE PARTICULE MODIFIÉE

(30) Priority: 17.02.2012 US 201213399913
(43) Date of publication of application: 24.12.2014
(73) Proprietor: Halliburton Energy Services, Inc., Houston, TX 77072 (US)
(72) Inventor: RODDY, Craig W., Duncan, Oklahoma 73533 (US); CHATTERJI, Jiten, Duncan, Oklahoma 73533 (US); BRENNEIS, Darrell Chad, Marlow, Oklahoma 73055 (US); JARRATT, Callie R., Duncan, Oklahoma 73533 (US)
(74) Representative: King, Lawrence
(86) International application number: PCT/US2013/026162
(87) International publication number: WO 2013/123207

(56) References cited:
- WO-A1-93/21122
- WO-A2-2006/074946
- WO-A2-2009/071962
- US-A- 2 871 133
- US-A1- 2006 213 397
- US-A1- 2007 289 744

## Description

### BACKGROUND

In general, well treatments include a wide variety of methods that may be performed in oil, gas, geothermal and/or water wells, such as drilling, completion and workover methods. The drilling, completion and workover methods may include, but are not limited to, drilling, fracturing, acidizing, logging, cementing, gravel packing, perforating and conformance methods. Many of these well treatments are designed to enhance and/or facilitate the recovery of desirable fluids from a subterranean well.

In cementing methods, such as well construction and remedial cementing, settable compositions are commonly utilized. As used herein, the term "settable composition" refers to a composition(s) that hydraulically sets or otherwise develops compressive strength. Settable compositions may be used in primary cementing operations whereby pipe strings, such as casing and liners, are cemented in well bores. In performing primary cementing, a settable composition may be pumped into an annulus between a subterranean formation and the pipe string disposed in the subterranean formation. The settable composition should set in the annulus, thereby forming an annular sheath of hardened cement (e.g., a cement sheath) that should support and position the pipe string in the well bore and bond the exterior surface of the pipe string to the walls of the well bore. Settable compositions also may be used in remedial cementing methods, such as the placement of cement plugs, and in squeeze cementing for sealing voids in a pipe string, cement sheath, gravel pack, formation, and the like. Settable compositions may also be used in surface applications, for example, construction cementing.

Settable compositions for use in subterranean formations may further include Portland cement. Portland cement generally is a major component of the cost for the cement compositions. Other components may be included in the cement composition in addition to, or in place of, the Portland cement. Such components may include fly ash, slag, shale, zeolite, metakaolin, pumice, perlite, lime, silica, rice-hull ash, micro-fine cement, lime kiln dust, and the like. However, the operating conditions for wells are becoming more challenging and demanding, and the search for new materials continues to meet these challenges.

US2007/289744 and WO2009/071962 discuss cementitious compositions that can be used in drilling oil and gas well applications. The compositions include a source of hydraulically settable cement, calcium carbonate, free lime and alkali ions (comprising between 1-25% cement kiln dust), calcium sulfate and an organic component.

### SUMMARY

An embodiment discloses a subterranean treatment method. The method comprises altering the mean particle size of cement kiln dust by grinding, separating, or a combination thereof, to a range of 1 micron to 350 microns; preparing a treatment fluid comprising cement kiln dust in an amount of at least 30% by weight of a total amount of cementitious components present in the treatment fluid; and introducing the treatment fluid into a subterranean formation.

Another embodiment discloses a well treatment fluid. The well treatment fluid comprises cement kiln dust in an amount of at least 30% by weight of a total amount of cementitious components present in the treatment fluid, and wherein the cement kiln dust having a mean particle size of 1 micron to 350 microns, and said mean particle size has been altered by grinding, separating, or a combination thereof.

The features and advantages of the present invention will be readily apparent to those skilled in the art.

### DESCRIPTION OF PREFERRED EMBODIMENTS

Embodiments of the settable compositions of the present invention comprise cement kiln dust having a mean particle size that has been altered from its original size. The mean particle size of the cement kiln dust may be altered, for example, to selectively increase or decrease the mean particle size as desired for a particular application.

In embodiments of the present invention, altering the mean particle size of the cement kiln dust may improve one or more properties of the cement kiln dust, including the void-filling properties, gelation times, and compressive strengths. In some embodiments, the mean particle size of the cement kiln dust may be selectively altered based on the sizes of voids to be filled, which may be beneficial in remedial cementing methods, for example. For example, the mean particle size of the cement kiln dust may be optimized to more effectively fill voids in a pipe string, cement sheath, gravel pack, formation, or the like. In some embodiment, it is believed that altering the mean particle size of the cement kiln dust may be used to adjust the gelation time of compositions containing the cement kiln dust. In some embodiments, the mean particle size of the cement kiln dust may be reduced to provide an increase in compressive strength. For example, reducing mean particle size of the cement kiln dust to less than 15 microns has been shown to provide unexpected increases in compressive strength for settable compositions to which the cement kiln dust may be added, especially when compared to use of the cement kiln dust prior to the size reduction.

In some embodiments, the mean particle size of the cement kiln dust may be reduced from its original size to provide an increase in compressive strength of at least 5%, for example an increase in an amount in a range of at least 5% to 100%. In specific embodiments, the mean particle size of the cement kiln dust may be reduced to provide an increase in compressive strength of at least 20%, at least 40%, at least 60%, at least 80%, or at least 100%. It should be understood that, as used herein, an increase in compressive strength for the cement kiln dust having a reduced mean particle size refers to a comparison of the compressive strength of a settable composition comprising the reduced particle size cement kiln dust to a settable composition comprising the original cement kiln dust prior to the particle size reduction. The compressive strength may be determined using either a destructive or non-destructive testing method. In some embodiments, the compressive strength tests may be performed in accordance with API RP Practice 10B-2, Recommended Practice for Testing Well Cements, First Edition, July 2005. For example, the 24-hour compressive strength for a settable composition comprising the cement kiln dust may be determined using an Ultrasonic Cement Analyzer from Fann Instruments, Houston, Texas, while maintained at 140°F and 8,000 pounds per square inch ("psi"). In one particular example, the 24-hour compressive strengths may be determined for a settable composition having a density of 12 pounds per gallon ("lb/gal") [1.434 kg/l].

Cement kiln dust, as that term is used herein, refers to a partially calcined kiln feed which is removed from the gas stream and collected, for example, in a dust collector during the manufacture of cement. The cement kiln dust generally may exhibit cementitious properties, in that it may set and harden in the presence of water. Usually, large quantities of cement kiln dust are collected in the production of cement that are commonly disposed of as waste. Disposal of the cement kiln dust can add undesirable costs to the manufacture of the cement, as well as the environmental concerns associated with its disposal. The chemical analysis of the cement kiln dust from various cement manufactures varies depending on a number of factors, including the particular kiln feed, the efficiencies of the cement production operation, and the associated dust collection systems. Cement kin dust generally may comprise a variety of oxides, such as SiO₂, Al₂O₃, Fe₂O₃, CaO, MgO, SO₃, Na₂O, and K₂O.

In accordance with present embodiments, the mean particle size of the cement kiln dust can be altered using any suitable technique, including, without limitation, grinding or separating to provide a material having an altered particle size. Separating the cement kiln dust may include sieving or any other suitable technique for separating the cement kiln dust to provide a mean particle size that has been altered from its original size. For example, sieving may be used to produce cement kiln dust having an increased or reduced mean particle size as desired for a particular application. By way of further example, grinding may be used to decrease the mean particle size of the cement kiln dust. Combinations of grinding and separating may be used in some embodiments. The term "ground" or "grinding" as used herein means using a grinder (e.g., ball mill, rod mill, etc.) to reduce the particle size of the specified component(s). An example of a suitable grinder is an 8000 Mixer/Mill® ball mill, available from SPEX Sample Prep. In some embodiments, the cement kiln dust may be ground for a time period in a range of from 30 minutes to 1 hour.

The mean particle size of the cement kiln dust can be altered to any size suitable for use in cementing operations. The mean particle size of the cement kiln dust is altered from its original particle size to have a mean particle size in a range of 1 micron to 350 microns. The mean particle size corresponds to d50 values as measured by particle size analyzers such as those manufactured by Malvern Instruments, Worcestershire, United Kingdom.

In some embodiments, the mean particle size of the cement kiln of the cement kiln dust may be increased from its original size. For example, the mean particle size of the cement kiln dust may be at least 5% greater than its original size. In some embodiments, at least a portion of the cement kiln dust may be increased to a size that is in a range of from 5% to 100% greater than its original size. In some embodiments, the mean particle size may be increased to a size ranging between any of and/or including any of 5%, 10%, 15%, 20%, 25%, 30%, 35%, 40%, 45%, 50%, 55%, 60%, 65%, 70%, 75%, 80%, 90%, or 95% greater than its original size.

In some embodiments, the mean particle size of the cement kiln dust may be reduced from its original size. For example, the mean particle size may be reduced in an amount sufficient to increase the compressive strength of the cement kiln dust. In some embodiments, the cement kiln dust may have a mean particle size that is at least 5% less than its original size. In some embodiments, at least a portion of the cement kiln dust may be reduced to have a mean particle size in a range of from 5% to 95% of its original size. For example, the mean particle size may be reduced to a size ranging between any of and/or including any of 5%, 10%, 15%, 20%, 25%, 30%, 35%, 40%, 45%, 50%, 55%, 60%, 6%, 70%, 75%, 80%, 90%, or 95% of its original size. By way of example, the reduced particle size cement kiln dust may have a mean particle size of less than 15 microns. In some embodiments, the reduced particle size cement kiln dust may have a mean particle size of less than 10 microns, less than 5 microns, less than 4 microns, less than 3 microns, less than 2 microns, or less than 1 micron. In specific embodiments, the reduced particle size cement kiln dust may have a mean particle size in a range of from 0.1 microns to 15 microns, from 0.1 microns to 10 microns, or from 1 micron to 10 microns. One of ordinary skill in the art, with the benefit of this disclosure, should be able to select a particle size for the cement kiln dust suitable for a particular application.

The cement kiln dust having a particle size that has been altered may be included in the settable compositions in an amount sufficient to provide, for example, the desired compressive strength, gelation time, and the like. In some embodiments, the altered particle size cement kiln dust may be present in the settable compositions of the present invention in an amount in an amount of at least 30% by weight of cementitious components ("% bwoc") present in the treatment fluid. The term "cementitious components" refers to the components, or a combination thereof, of the settable compositions that hydraulically set, or otherwise harden, to develop compressive strength, including, for example, cement kiln dust, Portland cement, fly ash, natural pozzolans (e.g., pumicite), slag, lime, shale, and the like.

Embodiments of the settable compositions may further comprise one or more additional additives, including, but not limited to, hydraulic cement, fly ash, slag, shale, zeolite, metakaolin, pumice, perlite, lime, silica, rice-hull ash, micro-fine cement, lime kiln dust, and combinations thereof, and the like. In accordance with present embodiments, the cement kiln dust having a mean particle size that has been altered may be prepared by a process comprising intergrinding the cement kiln dust with one or more of the additional additives to a particular desired size. For example, the cement kiln dust and the one or more additional additives may be interground to a mean particle size of less than 15 microns. In some embodiments, the cement kiln dust and the one or more additional additives may be interground to a mean particle size of less than 10 microns, less than 5 microns, less than 4 microns, less than 3 microns, less than 2 microns, or less than 1 micron. In specific embodiments, the cement kiln dust and the one or more additional additives may be interground to a mean particle size in a range from 0.1 microns to 15 microns, from 0.1 microns to 10 microns, or from 1 micron to 10 microns. One of ordinary skill in the art, with the benefit of this disclosure, should be able to select a particle size of the interground cement kiln dust and the one or more additional additives suitable for a particular application.

Hydraulic cement may be included in embodiments of the settable compositions of the present invention. A variety of hydraulic cements may be utilized in accordance with the present invention, including, but not limited to, those comprising calcium, aluminum, silicon, oxygen, iron, and/or sulfur, which set and harden by reaction with water. Suitable hydraulic cements include, but are not limited to, Portland cements, pozzolana cements, gypsum cements, high alumina content cements, slag cements, silica cements, and combinations thereof. In certain embodiments, the hydraulic cement may comprise a Portland cement, including Portland cements classified as Classes A, C, G and H cements according to American Petroleum Institute, API Specification for Materials and Testing for Well Cements, API Specification 10, Fifth Edition, July 1, 1990. In addition, Portland cements suitable for use in embodiments the present invention may also include those classified as ASTM Type I, II, III, IV, or V. One of ordinary skill in the art, with the benefit of this disclosure, will recognize the appropriate amount of the cement to include for a chosen application.

Fly ash may be included in embodiments of the settable compositions of the present invention. A variety of fly ashes may be suitable, including fly ash classified as Class C and Class F fly ash according to American Petroleum Institute, API Specification for Materials and Testing for Well Cements, API Specification 10, Fifth Ed., July 1, 1990. Class C fly ash comprises both silica and lime so that, when mixed with water, it sets to form a hardened mass. Class F fly ash generally does not contain sufficient lime, so an additional source of calcium ions may be required for the Class F fly ash to form a settable composition with water. In some embodiments, lime may be mixed with Class F fly ash in an amount in the range of 0.1% to 25% by weight of the fly ash. In some instances, the lime may be hydrated lime. Suitable examples of fly ash include, but are not limited to, POZMIX® A cement additive, available from Halliburton Energy Services, Inc., Duncan, Oklahoma. Where present, the fly ash generally may be included in the settable compositions in an amount sufficient to provide the desired compressive strength, density, and/or cost. In some embodiments, the fly ash may be present in an amount ranging between any of and/or including any of 10%, 20%, 30%, 40%, 50%, 60%, or 70% bwoc. One of ordinary skill in the art, with the benefit of this disclosure, will recognize the appropriate amount of the fly ash to include for a chosen application.

Slag may be included in embodiments of the settable compositions of the present invention. Slag generally does not contain sufficient basic material, so slag may be used with a base to produce a settable composition that may react with water to set to form a hardened mass. Examples of suitable sources of bases include, but are not limited to, sodium hydroxide, sodium bicarbonate, sodium carbonate, lime, and combinations thereof. Where present, the slag generally may be included in the settable compositions in an amount sufficient to provide the desired compressive strength, density, and/or cost. In some embodiments, the slag may be present in an amount ranging between any of and/or including any of 10%, 20%, 30%, 40%, 50%, 60%, or 70% bwoc. One of ordinary skill in the art, with the benefit of this disclosure, will recognize the appropriate amount of the slag to include for a chosen application.

Shale may be included in embodiments of the settable compositions of the present invention. A variety of shales may be suitable, including those comprising silicon, aluminum, calcium, and/or magnesium. An example of a suitable shale comprises vitrified shale. Suitable examples of vitrified shale include, but are not limited to, PRESSUR-SEAL FINE LCM material and PRESSUR-SEAL COARSE LCM material, which are available from TXI Energy Services, Inc., Houston, Texas. Generally, the shale may have any particle size distribution as desired for a particular application. In certain embodiments, the shale may have a particle size distribution in the range of 37 microns to 4,750 microns. Where present, the shale may be included in the settable compositions of the present invention in an amount sufficient to provide the desired compressive strength, density, and/or cost. In some embodiments, the shale may be present in an amount ranging between any of and/or including any of 10%, 20%, 30%, 40%, 50%, 60%, or 70% bwoc. One of ordinary skill in the art, with the benefit of this disclosure, will recognize the appropriate amount of the shale to include for a chosen application.

Zeolite may be included in embodiments of the settable compositions of the present invention. Zeolites suitable for use typically may include porous alumino-silicate minerals that may be either a natural or synthetic material. Synthetic zeolites are based on the same type of structural cell as natural zeolites, and may comprise aluminosilicate hydrates. As used herein, the term "zeolite" refers to all natural and synthetic forms of zeolite. Examples of suitable zeolites are described in more detail in U.S. Patent No. 7,445,669. An example of a suitable source of zeolite is available from the C2C Zeolite Corporation of Calgary, Canada. In some embodiments, the zeolite may be present in an amount ranging between any of and/or including any of 10%, 20%, 30%, 40%, 50%, 60%, or 70% bwoc. One of ordinary skill in the art, with the benefit of this disclosure, will recognize the appropriate amount of the zeolite to include for a chosen application.

Metakaolin may be included in embodiments of the settable compositions of the present invention. Generally, metakaolin is a white pozzolan that may be prepared by heating kaolin clay, for example, to temperatures in the range of 600°C to 800°C. In some embodiments, the metakaolin may be present in an amount ranging between any of and/or including any of 10%, 20%, 30%, 40%, 50%, 60%, or 70% bwoc. One of ordinary skill in the art, with the benefit of this disclosure, will recognize the appropriate amount of the metakaolin to include for a chosen application.

Pumice may be included in embodiments of the settable compositions of the present invention. Generally, pumice is a volcanic rock that exhibits cementitious properties, in that it may set and harden in the presence of hydrated lime and water. Hydrated lime may be used in combination with the pumice, for example, to provide sufficient calcium ions for the pumicite to set. In some embodiments, the pumice may be present in an amount ranging between any of and/or including any of 10%, 20%, 30%, 40%, 50%, 60%, or 70% bwoc. One of ordinary skill in the art, with the benefit of this disclosure, will recognize the appropriate amount of the pumice to include for a chosen application.

Perlite may be included in embodiments of the settable compositions of the present invention. Perlite is an ore and generally refers to a naturally occurring volcanic, amorphous siliceous rock comprising mostly silicon dioxide and aluminum oxide. Perlite suitable for use in embodiments of the present invention includes expanded perlite and unexpanded perlite. In some embodiments, the perlite may comprise unexpanded perlite. The perlite may also be ground, for example. In some embodiments, the perlite may be present in an amount ranging between any of and/or including any of 10%, 20%, 30%, 40%, 50%, 60%, or 70% bwoc. One of ordinary skill in the art, with the benefit of this disclosure, will recognize the appropriate amount of the perlite to include for a chosen application.

Lime may be included in embodiments of the settable compositions of the present invention. In certain embodiments, the lime may be hydrated lime. The lime may be included in embodiments of the settable compositions, for example to, form a hydraulic composition with other components of the settable compositions, such as the pumice, fly ash, slag, and/or shale. Where present, the lime may be included in the settable compositions in an amount in the range of from 0.1% to 25% bwoc, for example. In some embodiments, the lime may be present in an amount ranging between any of and/or including any of 5%, 10%, 15%, 20%, or 25% bwoc. One of ordinary skill in the art, with the benefit of this disclosure, will recognize the appropriate amount of the lime to include for a chosen application.

Silica may be included in embodiments of the settable compositions of the present invention. Silicas suitable for use typically may include amorphous silica, crystalline silica, or combinations thereof. Crystalline silica is a powder that may be included in embodiments of the settable compositions, for example, to prevent cement compressive strength retrogression. Amorphous silica is a powder that may be included in embodiments of the settable compositions as a lightweight filler and/or to increase cement compressive strength. In some embodiments, the silica may be present in an amount ranging between any of and/or including any of 10%, 20%, 30%, 40%, 50%, 60%, or 70% bwoc. One of ordinary skill in the art, with the benefit of this disclosure, will recognize the appropriate amount of the silica to include for a chosen application.

Rice-hull ash may be included in embodiments of the settable compositions of the present invention. In general, rice-hull ash is the ash produced from the burning of rice hulls, which are the hard coverings of grains of rice, and may comprise primarily silica and carbon. In some embodiments, the rice-hull ash may be present in an amount ranging between any of and/or including any of 10%, 20%, 30%, 40%, 50%, 60%, or 70% bwoc. One of ordinary skill in the art, with the benefit of this disclosure, will recognize the appropriate amount of the rice-hull ash to include for a chosen application.

Micro-fine cement may be included in embodiments of the settable compositions of the present invention. As used herein, the term "micro-fine cement" refers to a cement having a mean particle size no larger than 5 microns, for example, in a range of 1 micron to 5 microns. In some embodiments, the micro-fine cement may be present in an amount ranging between any of and/or including any of 10%, 20%, 30%, 40%, 50%, 60%, or 70% bwoc. One of ordinary skill in the art, with the benefit of this disclosure, will recognize the appropriate amount of the micro-fine cement to include for a chosen application.

Lime kiln dust may be included in embodiments of the settable compositions of the present invention. Lime kiln dust, as that term is used herein, refers to a product generated in the manufacture of lime. In some embodiments, the lime kiln dust may be present in an amount ranging between any of and/or including any of 10%, 20%, 30%, 40%, 50%, 60%, or 70% bwoc. One of ordinary skill in the art, with the benefit of this disclosure, will recognize the appropriate amount of the lime kiln dust to include for a chosen application.

Embodiments of the settable compositions further may include water. The water that may be used in embodiments of the settable compositions include, for example, freshwater, saltwater (*e.g.,* water containing one or more salts dissolved therein), brine (*e.g.,* saturated saltwater produced from subterranean formations), seawater, or combinations thereof. Generally, the water may be from any source, provided that the water does not contain an excess of compounds that may undesirably affect other components in the settable composition. In some embodiments, the water may be included in an amount sufficient to form a pumpable slurry. In some embodiments, the water may be included in the settable compositions of the present invention in an amount in the range of 40% to 200% bwoc. For example, the water may be present in an amount ranging between any of and/or including any of 50%, 75%, 100%, 125%, 150%, or 175% bwoc. In specific embodiments, the water may be included in an amount in the range of 40% to 150% bwoc. One of ordinary skill in the art, with the benefit of this disclosure, will recognize the appropriate amount of water to include for a chosen application.

Optionally, other additional additives may be added to the settable compositions of the present invention as deemed appropriate by one skilled in the art, with the benefit of this disclosure. Examples of such additives include, but are not limited to, strength-retrogression additives, set accelerators, weighting agents, lightweight additives, gas-generating additives, mechanical-property-enhancing additives, lost-circulation materials, filtration-control additives, dispersants, fluid-loss-control additives, defoaming agents, foaming agents, oil-swellable particles, water-swellable particles, thixotropic additives, and combinations thereof. Specific examples of these, and other, additives include salts, fibers, hydratable clays, microspheres, elastomers, elastomeric particles, resins, latex, combinations thereof, and the like. A person having ordinary skill in the art, with the benefit of this disclosure, will readily be able to determine the type and amount of additive useful for a particular application and desired result. Embodiments of the settable compositions may be foamed and/or extended as desired by those of ordinary skill in the art.

The settable compositions of the present invention should have a density suitable for a particular application as desired by those of ordinary skill in the art, with the benefit of this disclosure. In some embodiments, the settable compositions may have a density in the range of from 8 lb/gal [0.96 kg/l] to 16 lb/gal [1.9 kg/l]. In other embodiments, the settable compositions may be foamed to a density in the range of from 8 lb/gal [0.96 kg/l] to 13 lb/gal [1.6 kg/l].

While the settable compositions may be suitable for a number of different cementing operations, they may be particularly suitable for methods of cementing in a subterranean formation. For example, the settable compositions may be used in primary and remedial cementing operations in which the settable compositions may be introduced into a subterranean formation and allowed to set. As used herein, introducing the settable composition into a subterranean formation includes introduction into any portion of the subterranean formation, including, without limitation, into a well bore drilled into the subterranean formation, into a near well bore region surrounding the well bore, or into both.

In primary cementing embodiments, for example, a settable composition may be introduced into a space between a wall of a well bore and a conduit (*e.g.,* pipe strings, liners) located in the well bore, the well bore penetrating the subterranean formation. The settable composition may be allowed to set to form an annular sheath of hardened cement in the space between the well bore wall and the conduit. Among other things, the set settable composition may form a barrier, preventing the migration of fluids in the well bore. The set settable composition also may, for example, support the conduit in the well bore.

In remedial cementing embodiments, a settable composition may be used, for example, in squeeze-cementing operations or in the placement of cement plugs. By way of example, the settable composition may be placed in a well bore to plug an opening, such as a void or crack, in the formation, in a gravel pack, in the conduit, in the cement sheath, and/or a microannulus between the cement sheath and the conduit.

While the preceding description is directed to the use of the cement kiln dust having a mean particle size that has been altered in subterranean cementing methods, it should be understood that embodiments of the present technique also encompasses the use of the altered particle size cement kiln dust in any of a variety of different subterranean treatments. For example, a subterranean treatment method may include providing a treatment fluid comprising the altered particle size cement kiln dust and introducing the treatment fluid into a subterranean formation. The cement kiln dust having a mean particle size that has been altered may be included in any of a number of well treatment fluids that may be used in subterranean treatments, including drilling fluids, completion fluids, spacer fluids, stimulation fluids, and well clean-up fluids. For example, a drilling fluid may comprise the reduced particle size cement kiln dust, wherein the drilling fluid may be circulated downwardly through a drill pipe and drill bit and then upwardly through the well bore to the surface. The drilling fluid used may be any number of fluids (gaseous or liquid) and mixtures of fluids and solids (such as solid suspensions, mixtures, and emulsions).

In some embodiments, a spacer fluid may comprise the cement kiln dust having a mean particle size that has been altered. Spacer fluids may be used, for example, in the displacement of fluids from well bore. In an embodiment, the fluid displaced by the spacer fluid comprises a drilling fluid. By way of example, the spacer fluid may be used to displace the drilling fluid from the well bore. The drilling fluid may include, for example, any number of fluids, such as solid suspensions, mixtures, and emulsions. Additional steps in embodiments of the method may comprise introducing a pipe string into the well bore, introducing a cement composition into the well bore with the spacer fluid separating the cement composition and the first fluid. In an embodiment, the cement composition may be allowed to set in the well bore. The cement composition may include, for example, cement and water.

Accordingly, embodiments of the present invention disclose methods and compositions that comprise cement kiln dust having a mean particle size that has been altered. There may be several potential advantages to the methods and compositions of the present invention, only some of which may be alluded to herein. One of the many potential advantages of embodiments of the present invention is that reducing the particle size of the cement kiln dust can result in increased compressive strength for the settable compositions after setting. For example, it has been shown that compositions with reduced particle size cement kiln dust have increased compressive strength as compared to use of the cement kiln dust prior to the size reduction. Another potential advantage is that altering the mean particle size of the cement kiln dust may impact the gelation time of compositions containing the cement kiln dust. Yet another potential advantage is that the mean particle size of the cement kiln dust may be selectively altered, for example, based on the size of voids. This could potentially result in more effective remedial cementing methods, as the particle size of the cement kiln dust has been optimized.

To facilitate a better understanding of the present invention, the following examples of certain aspects of some embodiments are given. In no way should the following examples be read to limit, or define, the scope of the invention.

### EXAMPLE 1

The following series of tests was performed to evaluate the force resistance properties of settable compositions comprising cement kiln dust having a mean particle size that has been reduced. Two different sample settable compositions, designated Samples 1 and 2, were prepared by adding 250 grams of cement kiln dust to 267.3 grams of tap water while mixing in a Waring blender at 4,000 rpm for 15 seconds followed by mixing at 12,000 rpm for 35 seconds for each sample. Sample 1 contained unground cement kiln dust while the cement kiln dust included in Sample 2 was ground to a reduced particle size. Each of Samples 1 and 2 was then placed in a sealed cylindrical container, 2 inches in diameter by 4 inches in height. Each container was placed in a water bath at 140°F and allowed to cure for 96 hours. Each container was then removed from the water bath, allowed to cool, and the cylindrical samples were demolded. The cylindrical samples were then placed in a Tinius Olsen tester, and the compressive strengths were determined. The compressive strength testing was performed in accordance with API RP Practice 10B-2, *Recommended Practice for Testing Well Cements.*

Sample 1 comprised water (106.93% bwoc) and cement kiln dust (100% bwoc). The cement kiln dust was unground and had a mean particle size of 18.7 microns. Sample 1 had a density of 12 lb/gal [1.4k kg/l].

Sample 2 comprised water (106.93% bwoc) and ground cement kiln dust (100% bwoc). The cement kiln dust in Sample 2 was ground from a mean particle size of 18.7 microns to a mean particle size of 5.9 microns using an 8000 Mixer/Mill® ball mill, available from SPEX Sample Prep. Sample 2 had a mean particle size reduction of 68.45%. The cement kiln dust was ground in the grinder for time period of 30 minutes to 1 hour. Sample 2 had a density of 12 lb/gal [1.4 kg/l].

The results of the compressive strength testing are provided in Table 1 below. The data reported in the table below is the average of 3 tests for each of the sample settable compositions.

**TABLE 1**

| **Compressive Strength Tests** | | | | | | |
|---|---|---|---|---|---|---|
| Sample No. | Density (lb/gal) [kg/l | Water (% bwoc) | CKD (% bwoc) | CKD Particle Size (micron) | Temp. (°F) [°C] | 96-Hr Comp. Strength (psi) [MPa] |
| 1 | 12 [1.4] | 106.93 | 100 | 18.7 | 140 [60] | 64.3 [0.44] |
| 2 | 12 [1.4] | 106.93 | 100 | 5.9 | 140 [60] | 169.5 [1.17] |

Example 1 thus indicates that reducing the particle size of the cement kiln dust may increase the compressive strength of the settable compositions as compared to unground cement kiln dust. At 140°F [60°C], for example, Sample 2 with cement kiln dust ground to a mean particle size of 5.9 microns had a 96-hour compressive strength of 169.5 psi [1.17 MPa] as compared to a 96-hour compressive strength of 64.3 psi [0.44 MPa] for Sample 1 with unground cement kiln dust.

### EXAMPLE 2

An additional series of tests was performed to further evaluate the force resistance properties of settable compositions comprising cement kiln dust have a mean particle size that has been reduced. Two different sample settable compositions, designated Samples 3 and 4, were prepared by adding 200 grams of cement kiln dust to 213.9 grams of tap water while mixing in a Waring blender at 4,000 rpm for 15 seconds followed by mixing at 12,000 rpm for 35 seconds for each sample. Sample 3 contained unground cement kiln dust while the cement kiln dust in Sample 4 was ground to a reduced particle. Each of the samples was then placed in an Ultrasonic Cement Analyzer ("UCA") from Fann Instruments, Houston, TX. In the UCA, the compressive strength of each sample was determined over time at 140°F [60°C] and 8,000 psi [55 MPa]. The compressive strength testing was performed in accordance with API RP Practice 10B-2, *Recommended Practice for Testing Well Cements.*

Sample 3 comprised water (106.93% bwoc) and cement kiln dust (100% bwoc). The cement kiln dust was unground and had a mean particle size of 18.7 microns. Sample 3 had a density of 12 lb/gal [1.4 kg/l].

Sample 4 comprised water (106.93% bwoc) and ground cement kiln dust (100% bwoc). The cement kiln dust in Sample 4 was ground from a mean particle size of 18.7 microns to a mean particle size of 9.7 microns using an 8000 Mixer/Mill® ball mill, available from SPEX Sample Prep. Sample 4 had a mean particle size reduction of 48.13%. The cement kiln dust was ground in the grinder for time period of 30 minutes to 1 hour. Sample 4 had a density of 12 lb/gal [1.4 kg/l].

The results of the compressive strength testing are provided in Table 2 below. The data reported in the table below is compressive strengths reported by the UCA at 12 hours and 24 hours.

**TABLE 2**

| **UCA Compressive Strength Tests** | | | | | | | |
|---|---|---|---|---|---|---|---|
| Sample No. | Density (lb/gal) [kg/l] | Water (% bwoc) | CKD (% bwoc) | CKD Particle Size (micron) | Temp. (°F) [°C] | 12-Hr Comp. Strength (psi) [MPa] | 24-Hr Comp. Strength (psi) |
| 3 | 12 [1.4] | 106.93 | 100 | 18.7 | 140 [60] | 153 [1] | 166 |
| 4 | 12 [1.4] | 106.93 | 100 | 9.7 | 140 [60] | 298 [2] | 326 |

Example 2 thus indicates that reducing the particle size of the cement kiln dust may increase the compressive strength of the settable compositions as compared to unground cement kiln dust. At 140°F [60°C], for example, Sample 4 with cement kiln dust ground to a mean particle size of 9.7 microns had a 12-hour compressive strength of 298 psi [2 MPa] as compared to a 12-hour compressive strength of 153 psi [1 MPa] for Sample 3 with unground cement kiln dust.

It should be understood that the compositions and methods are described in terms of "comprising," "containing," or "including" various components or steps, the compositions and methods can also "consist essentially of' or "consist of' the various components and steps. Moreover, the indefinite articles "a" or "an," as used in the claims, are defined herein to mean one or more than one of the element that it introduces.

For the sake of brevity, only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited.

Therefore, the present invention is well adapted to attain the ends and advantages mentioned as well as those that are inherent therein. Although individual embodiments are discussed, the invention covers all combinations of all those embodiments. Furthermore, no limitations are intended to the details of construction or design herein shown, other than as described in the claims below. Also, the terms in the claims have their plain, ordinary meaning unless otherwise explicitly and clearly defined by the patentee.

## Claims

1. A subterranean treatment method comprising:
altering the mean particle size of cement kiln dust by grinding, separating, or a combination thereof, to a range of 1 micron to 350 microns;
preparing a treatment fluid comprising cement kiln dust in an amount of at least 30% by weight of a total amount of cementitious components present in the treatment fluid;
introducing the treatment fluid into a subterranean formation

2. The method of claim 1 wherein the mean particle size of the cement kiln dust is less than 15 microns.

3. The method of claim 1 wherein the treatment fluid is a settable composition.

4. A well treatment fluid comprising:
cement kiln dust in an amount of at least 30% by weight of a total amount of cementitious components present in the treatment fluid, and wherein the cement kiln dust having a mean particle size of 1 micron to 350 microns, and said mean particle size has been altered by grinding, separating, or a combination thereof.

5. The well treatment fluid of claim 4 wherein the mean particle size of the cement kiln dust is less than 15 microns.

## Patentansprüche

1. Unterirdisches Behandlungsverfahren, Folgendes umfassend:
Ändern der mittleren Teilchengröße von Zementofenstaub durch Zermahlen, Trennen oder einer Kombination davon auf einen Bereich von 1 Mikron bis 350 Mikron;
Vorbereiten eines Behandlungsfluids, das Zementofenstaub in einer Menge von mindestens 30 Gew.-% einer Gesamtmenge von Zementkomponenten umfasst, die im Behandlungsfluid vorliegen; Einführen des Behandlungsfluids in eine unterirdische Formation.

2. Verfahren nach Anspruch 1, wobei die mittlere Teilchengröße des Zementofenstaubs kleiner als 15 Mikron ist.

3. Verfahren nach Anspruch 1, wobei das Behandlungsfluid eine härtbare Zusammensetzung ist.

4. Bohrlochbehandlungsfluid, Folgendes umfassend:
Zementofenstaub in einer Menge von mindestens 30 Gew.-% einer Gesamtmenge von Zementkomponenten, die in einem Behandlungsfluid vorliegen, und wobei der Zementofenstaub eine mittlere Teilchengröße von 1 Mikron bis 350 Mikron aufweist, und die mittlere Teilchengröße durch Zermahlen, Trennen oder einer Kombination davon geändert wurde.

5. Bohrlochbehandlungsfluid nach Anspruch 4, wobei die mittlere Teilchengröße des Zementofenstaubs kleiner als 15 Mikron ist.

## Revendications

1. Procédé de traitement souterrain comprenant :
la modification de la dimension de particule moyenne de la poussière de four à ciment par broyage, séparation, ou une combinaison de ceux-ci, dans une plage de 1 micron à 350 microns ;
la préparation d'un fluide de traitement comprenant de la poussière de four à ciment à raison d'au moins 30 % en poids d'une quantité totale de composants cimentaires présents dans le fluide de traitement ;
l'introduction du fluide de traitement dans une formation souterraine.

2. Procédé selon la revendication 1, dans lequel la dimension de particule moyenne de la poussière de four à ciment est inférieure à 15 microns.

3. Procédé selon la revendication 1, dans lequel le fluide de traitement est une composition durcissable.

4. Fluide de traitement de puits comprenant :
de la poussière de four à ciment à raison d'au moins 30 % en poids d'une quantité totale de composants cimentaires présents dans le fluide de traitement, et dans lequel la poussière de four à ciment présentant une dimension de particule moyenne de 1 micron à 350 microns, et ladite dimension de particule moyenne a été modifiée par broyage, séparation, ou une combinaison de ceux-ci.

5. Fluide de traitement de puits selon la revendication 4, dans lequel la dimension de particule moyenne de la poussière de four à ciment est inférieure à 15 microns.
